# EUROPÄISCHE PATENTSCHRIFT

(11) **EP 2 179 157 B1**
(45) Veröffentlichungstag und Bekanntmachung des Hinweises auf die Patenterteilung: **28.05.2014**
(21) Anmeldenummer: 08761051.5
(22) Anmeldetag: 16.06.2008
(51) Int. Cl.: F02D 11/10, F02D 9/10, F16K 31/04, H02K 5/00, H02K 7/14

(54) **ELEKTRISCHE VERBRENNUNGSKRAFTMASCHINEN-STELLANORDNUNG**
ELECTRICAL INTERNAL COMBUSTION ENGINE ADJUSTING ARRANGEMENT
SYSTÈME DE COMMANDE ÉLECTRIQUE DE MOTEURS À COMBUSTION INTERNE

(30) Priorität: 22.08.2007 DE 102007039689
(43) Veröffentlichungstag der Anmeldung: 28.04.2010
(73) Patentinhaber: Pierburg GmbH, 41460 Neuss (DE)
(72) Erfinder: GLAESSER, Michael, 12355 Berlin (DE); FUKUMOTO, Isao, 14167 Berlin (DE); NEISE, Ralf, 13086 Berlin (DE); NITSCH, Peter, 10781 Berlin (DE)
(74) Vertreter: ter Smitten, Hans
(86) Internationale Anmeldenummer: PCT/EP2008/057534
(87) Internationale Veröffentlichungsnummer: WO 2009/024369

(56) Entgegenhaltungen:
- EP-A- 1 126 147
- EP-A- 1 281 849
- EP-A- 1 308 612
- EP-A- 1 655 579
- GB-A- 2 323 128
- US-A1- 2005 092 293

## Beschreibung

Die Erfindung bezieht sich auf eine elektrische Verbrennungskraftmaschinen-Stellanordnung mit einem Gehäusekörper, der einen elektrischen Antriebsmotor hält.

Eine elektrische Stellanordnung für eine Verbrennungskraftmaschine ist beispielsweise aus DE 10 2004 053 703 A1 bekannt. Derartige Stellanordnungen dienen im Zusammenhang mit einer Verbrennungskraftmaschine zur Verstellung von Stellorganen, wie beispielsweise von Drosselklappen, Tumble-, Drall- oder Schaltklappen.

Der Antriebsmotor weist ein Metall-Motorgehäuse auf, das an der Abtriebsseite mit einer separaten Kunststoff-Stirnplatte verschlossen ist. Der Antriebsmotor wird mit separaten bügelartigen Elementen aus Kunststoff oder Metall mit dem Gehäusekörper verschraubt und dabei axial verklemmt. Hierdurch wird gleichzeitig eine radiale Positionierung des Antriebsmotors auf der Abtriebsseite in dem Gehäusekörper realisiert. Die gegenüberliegende geschlossene Seite des Gehäusekörpers wird durch einen zylindertopfförmigen Absatz des Motorgehäuses radial fixiert, der spielarm in einer entsprechenden Ausnehmung des Gehäusekörpers sitzt.

Eine weitere elektrische Stellanordnung ist aus GB 2 323 128 A bekannt.

Aufgabe der Erfindung ist es demgegenüber, die Herstellung und Montage der Stellanordnung zu vereinfachen.

Diese Aufgabe wird erfindungsgemäß gelöst mit den Merkmalen des Patentanspruchs 1.

Die erfindungsgemäße Stellanordnung weist an der Abtriebsseite einen Befestigungsflansch auf, der einstückig mit dem Motorgehäuse ausgebildet ist.

Ferner ragt die Stirnplatte mindestens teilweise lateral, also radial, über das Gehäuse hinaus und sitzt mit Klemmsitz in einer entsprechenden Ausnehmung des Gehäusekörpers. Die axiale Fixierung des Antriebsmotors in dem Gehäusekörper erfolgt also durch einen Befestigungsflansch, der kein separates Bauteil ist, sondern an das Motorgehäuse angeformt bzw. einstückig mit dem Motorgehäuse ausgebildet ist. Das Motorgehäuse und der Befestigungsflansch bestehen beispielsweise aus einem im wesentlichen zylindrischen Metallblech-Körper.

Die Kunststoff-Stirnplatte ragt wenigstens stellenweise seitlich über das im wesentlichen zylindrische Motorgehäuse hinaus. Der Gehäusekörper weist eine entsprechende zylindertopfförmige Ausnehmung zur Aufnahme des Antriebsmotors auf. Der äußerste Außendurchmesser der Stirnplatte bzw. der über das Motorgehäuse seitlich hinausragende Teile ist geringfügig größer als der Innendurchmesser der korrespondierenden Ausnehmung des Gehäusekörpers, so dass der Antriebsmotor leicht klemmend radial fixiert ist. Zur Fixierung des Antriebsmotors in dem Gehäusekörper werden keine weiteren Bauteile, bis auf Schrauben, benötigt. Hierdurch werden sowohl die Herstellung der Stellanordnungs-Komponenten, Gehäuse und Antriebsmotor, als auch die Montage erheblich vereinfacht.

Die Montage erfolgt, indem der Antriebsmotor mit seinem Motorgehäuse in die entsprechende Ausnehmung des Gehäusekörpers eingeschoben wird, so dass auch die Stirnplatte in die Ausnehmung klemmend einfährt. Der Befestigungsflansch des Antriebsmotors schlägt schließlich an entsprechenden Flanschflächen des Gehäusekörpers an und wird dort mit Schraubelementen u. ä. an dem Gehäusekörper axial fixiert. Auf diese Weise wird in Bezug auf alle drei Raumachsen ein fester und definierter Sitz des Antriebsmotors in dem Gehäusekörper hergestellt. Die auf diese Weise hergestellte Fixierung des Antriebsmotors in dem Gehäusekörper ist dauerhaft fest und verbessert die Schwingfestigkeit der Stellanordnung. Durch die Reduzierung der Anzahl der Einzelteile werden auch die Anzahl von möglichen Störquellen verringert und wird die Toleranzsituation im mechanischen Gesamtsystem verbessert.

Vorzugsweise weist die Stirnplatte mindestens drei radiale Klemmrippen auf, die lateral über das zylindrische Motorgehäuse hinausragen und mit Klemmsitz in der Gehäusekörper-Ausnehmung sitzen. Durch das Vorsehen von drei oder mehr radialen Klemmrippen wird ein definierter Sitz des Antriebsmotors in der Gehäusekörper-Ausnehmung realisiert. Der Grundkörper der Stirnplatte kann, muss jedoch nicht, einen geringeren Außendurchmesser aufweisen als das Motorgehäuse.

Vorzugsweise trägt die Stirnplatte ein Rotor-Drehlager und/oder eine Bürstenbrücke. Hierdurch wird die Anzahl an Einzelteilen reduziert, so dass sich die Herstellungs-und Montagekosten ebenfalls verringern.

Im folgenden wird unter Bezugnahmen auf die Zeichnungen ein Ausführungsbeispiel der Erfindung näher erläutert.

Es zeigen:
- Figur 1: eine geöffnete Stellanordnung mit längs geschnittenem Gehäusekörper und eingesetztem Antriebsmotor und
- Figur 2: die Stellanordnung der Figur 1 mit einer perspektivischen Ansicht auf die Stirnplatten des Antriebsmotors.

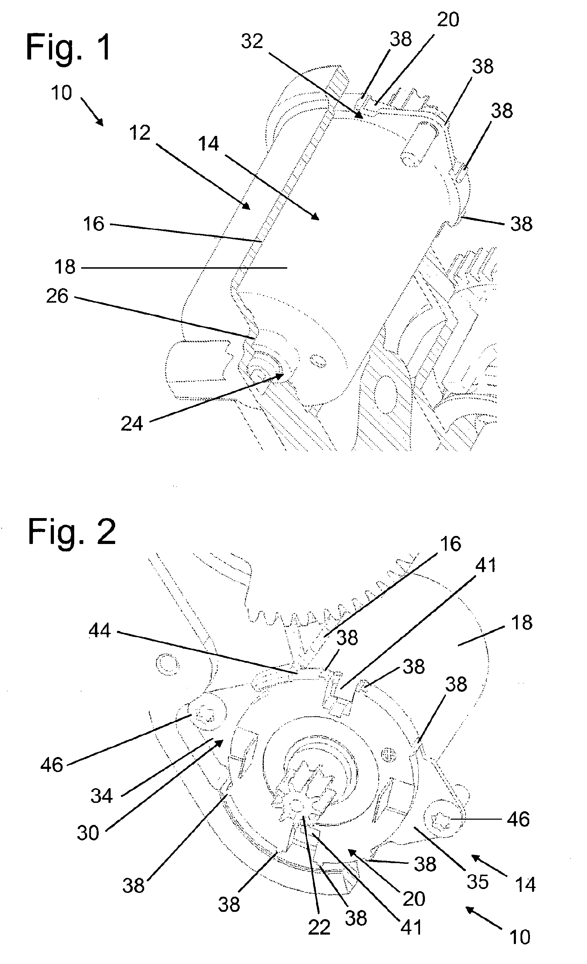

In den Figuren 1 und 2 ist eine elektrische Stellanordnung 10 für Verbrennungskraftmaschinen dargestellt. Die Stellanordnung weist einen Gehäusekörper 12, einen elektrischen Antriebsmotor 14 sowie weitere Bauteile auf. In den Darstellungen der Figuren 1 und 2 ist ein Kunststoff- Gehäusedeckel, der die in der Figur 2 dargestellte offene Seite des Kunststoff- Gehäusekörpers 12 verschließt, der Verständlichkeit halber weg gelassen.

Der Gehäusekörper 12 weist eine im wesentlichen zylindrische Ausnehmung 16 auf, in der der Antriebsmotor 14 sitzt. Der Antriebsmotor 14 weist unter anderem ein im wesentlichen zylindrisches Metall-Motorgehäuse 18 auf, das an seiner in der Figur 2 dargestellten Abtriebsseite mit einer separaten Kunststoff-Stirnplatte 20 verschlossen ist. An der Abtriebsseite tritt die Rotorwelle mit einem Motorritzel 22 aus dem Motorgehäuse 18 aus.

Der zylindrische Teil des Motorgehäuses 18 sitzt mit einem Spiel von beispielsweise 1 mm in der Gehäusekörper-Ausnehmung 16. An der in der Figur 1 dargestellten geschlossenen Seite des Antriebsmotors 14 weist das Motorgehäuse 18 einen topfartigen Ansatz 24 auf, der mit einem spielarmen Sitz in einer entsprechenden Ansatz-Ausnehmung 26 des Gehäusekörpers 12 sitzt.

Die Abtriebsseite des Antriebsmotors 14 ist in dem Gehäusekörper 12 wie folgt fixiert:
Das Motorgehäuse 18 weist einen einstückig mit ihm ausgebildeten Befestigungsflansch 30 auf, der von einem umlaufenden Flanschkragen 32 und zwei Flanschzungen 34, 35 gebildet wird, die ca. 180 Grad zueinander stehen. Das Motorgehäuse 18 und der Befestigungsflansch 30 sind einstückig aus ungefähr 1 mm starkem Metallblech gefertigt. Auf die Öffnung des Motorgehäuses 18 ist eine Kunststoff-Stirnplatte 20 aufgesetzt, die durch zwei Biegelaschen 41 des Motorgehäuses 18 fixiert wird. Die Stirnplatte 20 trägt an ihrer Innenseite ein Rotor-Drehlager sowie eine Bürstenbrücke. Die Stirnplatte 20 ist im wesentlichen als Ringscheibe ausgebildet und schließt mit dem Befestigungsflansch 32 außerhalb der Flanschzungen 34, 35 bündig ab. Die Stirnplatte 20 weist acht radiale Klemmrippen 38 auf, die radial, also lateral, nach außen und über das zylindrische Motorgehäuse 18 um etwa 1 mm hinausragen.

Der Antriebsmotor 14 wird in den Gehäusekörper 12 montiert, indem der Antriebsmotor 14 in die Gehäusekörper- Ausnehmung 16 axial eingeschoben wird. Dabei positioniert sich der ein weiteres Rotor-Drehlager aufnehmende antriebsmotorseitige Ansatz 24 in der gehäusekörperseitigen Ausnehmung 26. Ferner verklemmt sich die Stirnplatte 20 mit ihren Klemmrippen 38 in einem zirkulären Absatz 44 an der Öffnungsseite der Ausnehmung 16. Die Flanschzungen 34, 35 werden mit Befestigungsschrauben 46 an entsprechende Flanschflächen des Gehäusekörpers 12 angeschraubt.

Der Antriebsmotor 14 wird an seiner Abtriebsseite durch die Stirnplatte 20 radial fixiert und durch Verschrauben des Befestigungsflansches 30 bzw. der Flanschzungen 34, 35 mit dem Gehäusekörper 12 axial fixiert. Auf diese Weise wird mit wenigen Bauteilen eine zuverlässige und spielfreie Montage und Fixierung des Antriebsmotors 14 in dem Gehäusekörper 12 realisiert.

## Patentansprüche

1. Elektrische Verbrennungskraftmaschinen-Stellanordnung (10) mit einem Gehäusekörper (12), der einen elektrischen Antriebsmotor (14) hält, wobei
der Antriebsmotor (14) ein Motorgehäuse (18) aufweist, das an der Abtriebsseite mit einer separaten Stirnplatte (20) verschlossen ist,
an der Abtriebsseite des Antriebsmotors (14) ein Befestigungsflansch (32) vorgesehen ist, der einstückig mit dem Motorgehäuse (18) ausgebildet ist, und
die Stirnplatte (20) mindestens teilweise radial über das Motorgehäuse (18) hinausragt,
**dadurch gekennzeichnet, dass**
die Stirnplatte (20) aus Kunststoff ist und mit Klemmsitz in einer entsprechenden Ausnehmung (44) des Gehäusekörpers (12) sitzt und den Antriebsmotor (14) radial fixiert.

2. Elektrische Verbrennungskraftmaschinen-Stellanordnung (10) nach Anspruch 1), **dadurch gekennzeichnet, dass** das Motorgehäuse (18) und der Befestigungsflansch (32) aus einem Metallblech-Körper bestehen.

3. Elektrische Verbrennungskraftmaschinen-Stellanordnung (10) nach Anspruch 1) oder 2), **dadurch gekennzeichnet, dass** die Stirnplatte (20) mindestens drei radiale Klemmrippen (38) aufweist.

4. Elektrische Verbrennungskraftmaschinen-Stellanordnung (10) nach einem der Ansprüche 1) bis 3), **dadurch gekennzeichnet, dass** die Stirnplatte (40) ein Rotor-Drehlager trägt.

5. Elektrische Verbrennungskraftmaschinen-Stellanordnung (10) nach einem der Ansprüche 1) bis 4), **dadurch gekennzeichnet, dass** die Stirnplatte (40) eine Bürstenbrücke trägt.

6. Elektrische Verbrennungskraftmaschinen-Stellanordnung (10) nach einem der Ansprüche 1) bis 5), **dadurch gekennzeichnet, dass** der Antriebsmotor (14) an der der Abtriebsseite gegenüberliegenden Seite eine topfförmige Ausstülpung (24) aufweist, die mit spielarmem Sitz in einer entsprechenden Ausnehmung (26) des Gehäusekörpers (12) lagert.

## Claims

1. An electrical adjusting arrangement (10) for an internal combustion engine, comprising a housing body (12) accommodating an electric drive motor (14),
the drive motor (14) including a motor housing (18) with an output side closed by a separate front plate (20),
a mounting flange (32) being disposed on an output side of the drive motor (14), the mounting flange being integral with the motor housing (18), and
the front plate (20) extending at least partially radially beyond the motor housing (18),
**characterized in that** the front plate (20) is made of plastic material and is configured to seat via a clamping fit in a corresponding recess (44) of the housing body (12) and to radially fix the drive motor (14).

2. The electrical adjusting arrangement (10) for an internal combustion engine, as recited in claim 1, **characterized in that** the motor housing (18) and the mounting flange (32) are formed by a sheet-metal body.

3. The electrical adjusting arrangement (10) for an internal combustion engine, as recited in claim 1 or 2, **characterized in that** the front plate (20) includes at least three radial clamping ribs (38).

4. The electrical adjusting arrangement (10) for an internal combustion engine, as recited in one of claims 1 to 3, **characterized in that** the front plate (20) is configured to receive a rotor pivot bearing.

5. The electrical adjusting arrangement (10) for an internal combustion engine, as recited in one of claims 1 to 4, **characterized in that** the front plate (20) is configured to receive a brush rocker.

6. The electrical adjusting arrangement (10) for an internal combustion engine, as recited in one of claims 1 to 5, **characterized in that** the drive motor (14) further includes, on the side opposite the output side, a cup-shaped projection (24) fitted with little play in a corresponding recess (26) of the housing body (12).

## Revendications

1. Système de commande électrique (10) de moteurs à combustion interne, comprenant un corps de boitier (12) contenant un moteur d'entrainement (14) électrique,
ledit moteur d'entrainement (14) comprenant un boitier de moteur (18) fermé au coté entrainé par une plaque frontale (20) séparée,
une bride de fixation (32) étant prévue au coté entrainé dudit moteur d'entrainement (14), ladite bride étant réalisée intégralement avec ledit boitier de moteur (18), et
ladite plaque frontale (20) saillant radialement, au moins en partie, au-delà du boitier de moteur (18),
**caractérisé en ce que**
ladite plaque frontale (20) est en matière plastique et est montée de manière serrée dans un évidement (44) correspondant dudit corps de boitier (12) et fixe radialement ledit moteur d'entrainement (14).

2. Système de commande électrique (10) de moteurs à combustion interne selon la revendication 1, **caractérisé en ce que** ledit boitier de moteur (18) et ladite bride de fixation (32) sont formé par un corps de tôle métallique.

3. Système de commande électrique (10) de moteurs à combustion interne selon les revendications 1 ou 2, **caractérisé en ce que** ladite plaque frontale (20) comprend au moins trois nervures de serrage (38) radiales.

4. Système de commande électrique (10) de moteurs à combustion interne selon l'une quelconque des revendications 1 à 3, **caractérisé en ce que** ladite plaque frontale (20) porte un palier de rotation du rotor.

5. Système de commande électrique (10) de moteurs à combustion interne selon l'une quelconque des revendications 1 à 4, **caractérisé en ce que** la plaque frontale (20) porte un porte-balai.

6. Système de commande électrique (10) de moteurs à combustion interne selon l'une quelconque des revendications 1 à 5, **caractérisé en ce qu'**au coté opposé au coté entrainé, ledit moteur d'entrainement (14) comprend une protubérance (24) en forme de pot qui est supporté, montée avec peu de jeu, dans un évidement (26) correspondant dudit corps de boitier (12).
